# EUROPEAN PATENT APPLICATION

(11) **EP 2 339 846 A1**
(43) Date of publication of application: **29.06.2011**
(21) Application number: 09821824.1
(22) Date of filing: 23.10.2009
(51) Int. Cl.: H04N 7/173, H04L 12/28

(54) **MULTIMEDIA DEVICE CONTROLLER, SOURCE DEVICE, SYNC DEVICE AND TRANSMISSION SYSTEM**

(30) Priority: 24.10.2008 JP 2008274876
(71) Applicant: Panasonic Corporation, Kadoma-shi Osaka 571-8501 (JP)
(72) Inventor: IGUCHI, Takashi, Osaka-shi Osaka 540-6207 (JP); IBARAKI, Susumu, Osaka-shi Osaka 540-6207 (JP)
(74) Representative: Grünecker, Kinkeldey, Stockmair & Schwanhäusser Anwaltssozietät
(86) International application number: PCT/JP2009/005589
(87) International publication number: WO 2010/047124

(57) **Abstract**

Disclosed are a multimedia device controller, a source device, a sink device and a transmission system that can manage multimedia devices capable of simultaneous output of video and audio from multiple Blu-ray discs or the like. A master device (110) references a source/sink device function management table (200) and a band management table (300) and controls the video and audio bands for the source and sink devices during transmission of multiple video and audio signals. When a band that is kept is changed, the master device (110) also confirms the status of a transmission path (100) and the content usage conditions of sink devices (140, 150) and controls the band. For example, when the master device (110) outputs two sets of video and audio in one set, the band is changed to one band in which the two sets of video and audio are synthesized.

## Description

### Technical Field

The present invention relates to a multimedia device control apparatus, a source device, a sink device and a transmission system for controlling a plurality of multimedia devices.

### Background Art

Heretofore, in a system to provide multimedia information according to user request, a wide frequency band is used, and audio, images, characters and so on are allocated on a per band basis, to transmit a plurality of information items at the same time.

With a multimedia information providing apparatus used in a vehicle, the frequency band that can be used is limited. In this limited transmission frequency band, transmission band needs to be managed properly in order to transmit a plurality of multimedia information items.

Patent literature 1 discloses a band management apparatus that checks the maximum bandwidth, minimum bandwidth and priority when a master device checks the band between a source device and a sink device. When a channel has a capacity to secure the maximum bandwidth, the apparatus disclosed in patent literature 1 secures the maximum bandwidth, or, when a channel cannot secure the maximum bandwidth, the apparatus reduces a bandwidth that is already kept or releases a band of lower priority free. By this means, provision is made for a plurality of devices to be able to make optimal use of a channel.

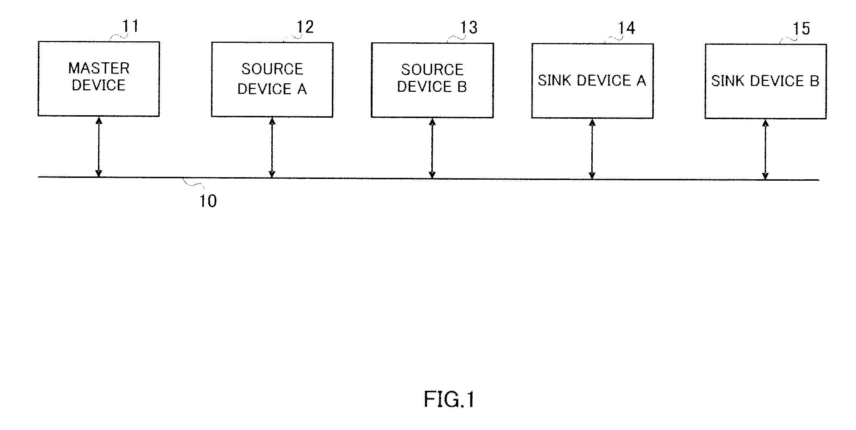

FIG.1 is a block diagram showing a configuration of a multimedia device control system used in a vehicle-mounted environment.

As shown in FIG.1, in a multimedia device control system, master device 11, a plurality of source device 12 and 13 (source devices A and B) and a plurality of sink devices 14 and 15 (sink devices A and B) are connected to channel 10.

Source devices A and B are video/audio output devices. Sink devices A and B are video/audio input devices. For example, as a vehicle-mounted electronic device, there is a display apparatus that displays images recorded in a recording medium such as a CD-ROM and a DVD or television broadcasting and similar images using an LCD or suchlike display, like a navigation system, a DVD (Digital Versatile Disc) player and a television receiver.

Channel 10 is represented by a network that is capable of transmitting arbitrary video, audio and control signals. Examples of protocols include the MOST (Media Oriented Systems Transport) standard (hereinafter "MOST") and IEEE (Institute of Electrical and Electronics Engineers) 1394 High Performance Serial Bus (hereinafter "IEEE1394").

Master device 11 manages audio and transmission in respect to devices connected to channel 10 (in this case, source devices A and B and sink devices A and B). To be more specific, master device 11 establishes audio and video transmission band between source devices and sink devices and performs a control and management.

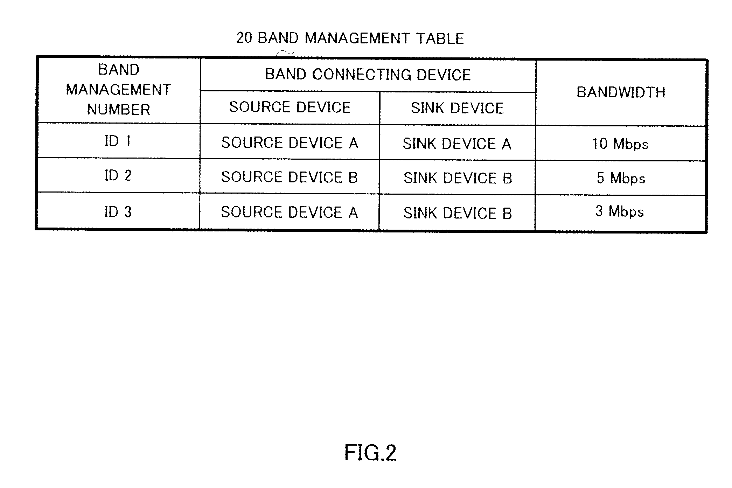

FIG.2 shows band management table 20 which master device 11 uses to manage source devices A and B and sink devices A and B.

As shown in FIG.2, band management table 20 stores a band connecting device and bandwidth per band management ID number. In FIG.2, for example, referring to band management ID number 1 , source device A and sink device A are stored as band connecting devices, and a bandwidth of 10 Mbps of channel 10 is stored. Also, referring to band management ID number 2, source device B and sink device B are stored as band connecting devices and a bandwidth of 5 Mbps of channel 10 is stored, and, referring to band management ID number 3, source device A and sink device B are stored as band connecting devices and a bandwidth of 5 Mbps of channel 10 is stored. The combination of source device A and sink device A associated with band management ID number 1 requires the maximum bandwidth.

In a vehicle-mounted environment, a plurality of source devices A and B and a plurality of sink devices A and B are present, and also master device 11 to control these devices is present. Channel 10 connects between these devices. When video and audio are transmitted and received, transmission band is secured between source devices A and B and sink devices A and B, and video and audio are transmitted in that transmission band. Master device 11 manages transmission band based on band management table 20.

### Citation List

### Patent Literature

PTL 1: Japanese Patent Application Laid-Open No. 2000-115198

### Summary of Invention

### Technical Problem

With a conventional vehicle-mounted multimedia device control apparatus, master device 11 performs a control every time one band is secured. In this case, the bandwidth is reduced, or a band of lower priority is released free, regardless of the relationships between a plurality of bands already kept on channel 10.

In conventional vehicle-mounted device communication, the video or audio of one content item provides only one output stream from one source device. For example, with conventional DVD or similar content, there is only one video output stream and one audio output stream for every one content item. Consequently, master device 11 does not have to consider the relationships between a plurality of bands.

However, for a vehicle-mounted multimedia device, introducing a blu-ray disc (BD) has the following problem.

With a BD, there are functions for outputting two streams of video and audio per content item at the same time, such as a bonus view picture-in-picture ("PinP") function. These two streams of video and audio data are related, so that a master device requires a system for managing a plurality of bands for two streams of video and audio data per content item and performing a band control based on the relationships between a plurality of bands.

Also, depending on the performance of source devices and sink devices, there are devices that cannot transmit and receive two streams of band. Consequently, a master device has to determine a transmission means for two streams of video and audio data based on the transmission functions of source devices and the reception functions of sink devices, and perform a band control.

It is therefore an object of the present invention to provide a multimedia device control apparatus, a source device, a sink device and a transmission system to manage a multimedia device that can output a plurality video and audio data items at the same time such as a BD.

### Solution to Problem

A multimedia device control apparatus according to the present invention comprises a channel and a multimedia device which is to be connected to the channel and which is capable of outputting a plurality of video and audio data items at the same time, and controls the multimedia device by controlling a band of the channel, and this multimedia device control apparatus has: a function management table that manages a function of the multimedia device; a band management table that manages a state of a band kept by the multimedia device; and a band control section that, when a plurality of video and audio data items are transmitted, controls video and audio bands, for the multimedia device, with reference to the function management table and the band management table.

A source device according to the present invention is to be connected to a multimedia device control apparatus via a channel and is capable of outputting a plurality of video and audio data items at the same time, and this source device receives a device control signal from the multimedia device control apparatus and performs transmission using a band specified by the control signal.

A sink device according to the present invention is connected to a multimedia device control apparatus via channel and is capable of outputting a plurality of video and audio data items at the same time, and this sink device receives a device control signal from the multimedia device control apparatus and performs reception using a band specified by the control signal.

A transmission system according to the present invention comprises a channel, a multimedia device that is connected to the channel and that is capable of outputting a plurality of video and audio data items at the same time, and a multimedia device control apparatus that manages the multimedia device by managing a band of the channel, and, in this transmission system, the multimedia device control apparatus has: a function management table that manages a function of the multimedia device; a band management table that manages a sate of a band kept by the multimedia device; and a band control section that, when a plurality of video and audio data items are transmitted, controls video and audio bands, for the multimedia device, with reference to the function management table and the band management table.

### Advantageous Effects of Invention

The present invention makes it possible to manage a multimedia device that can output a plurality of video and audio data items at the same time, such as a BD.

### Brief Description of Drawings

FIG.1 is a block diagram showing a configuration of a multimedia device control system used in a vehicle-mounted environment;
FIG.2 shows a band management table which a master device uses to manage source devices A and B and sink devices A and B;
FIG.3 is a block diagram showing a configuration of a multimedia device control system according to an embodiment of the present invention;
FIG.4 shows an example of source/sink device function management table according to the above embodiment;
Fig. 5 is a flowchart showing processing in a master device in a multimedia device control system according to the above embodiment on an overall scale;
FIG.6 is a control stream diagram for explaining source/sink device function check processing in a multimedia device control system according to the above embodiment;
FIG.7 is a flowchart showing band securing processing in a multimedia device control system according to the above embodiment;
FIG.8 shows one example of a band management table in a multimedia device control system according to the above embodiment;
FIG.9 is a flowchart showing band change processing in a multimedia device control system according to the above embodiment;
FIG.10 is a control stream diagram for explaining a method of using content by a multimedia device control system according to the above embodiment;
FIG.11 shows one example of a content use management table in a multimedia device control system according to the above embodiment;
FIG.12 shows one example of a band management table in the event a band is changed, in a multimedia device control system according to the above embodiment; and
FIG.13 is a flowchart showing band release processing in a multimedia device control system according to the above embodiment.

### Description of Embodiments

Now, embodiments of the present invention will be descried in detail with reference to the accompanying drawings.

### (Embodiment)

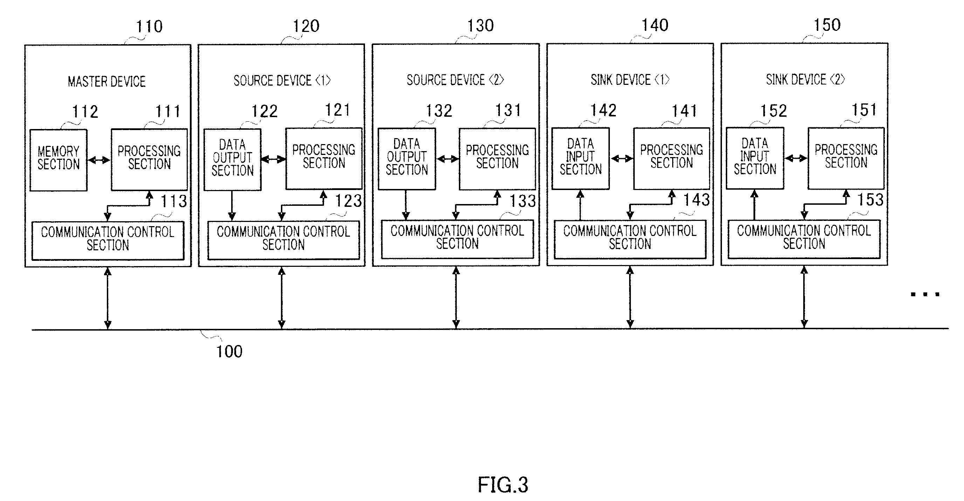

FIG.3 is a block diagram showing a configuration of a multimedia device control system according to an embodiment of the present invention.

In the multimedia device control system of FIG.3, master device 110, source device 120 (source device <1>), source device 130 (source device <2>), sink device 140 (sink device <1>) and sink device 150 (sink device <2>), are connected to channel 100. These devices can communicate with each other.

Source devices 120 and 130 are video/audio output devices. Sink devices 140 and 150 are video/audio input devices. For example, source device 120 is a BD that provides two-stream transmission content, and source device 130 is a DVD player. This is one example, and a navigation system, a DVD player or a television receiver may be used as a vehicle-mounted electronic device.

Channel 100 is a network that is capable of transmitting arbitrary video and audio control signals based on, for example, MOST and IEEE1394.

Master device 110 manages audio and video transmission in respect to source devices 120 and 130 and sink devices 140 and 150 connected to channel 100. Master device 110 manages a plurality of bands for two streams of video and audio data per content item.

Before securing bands, master device 110 checks the performance of source devices 120 and 130 and sink devices 140 and 150 and secures bands to suit the performance of devices.

Master device 110, when changing a band that is kept, checks the state of channel 100 and the situation of use of content by sink devices 140 and 150, and performs a band control.

Master device 110 has processing section 111, memory section 112, and communication control section 113.

Processing section 111 performs processing related to master device 110. Processing related to master device 110 includes all processing performed according to this embodiment. Examples include channel band management processing, retaining and reading processing with memory section 112 in each management tale. Other examples include processing of requesting processing to communication control section 113 when there is a command request and response to a sink device.

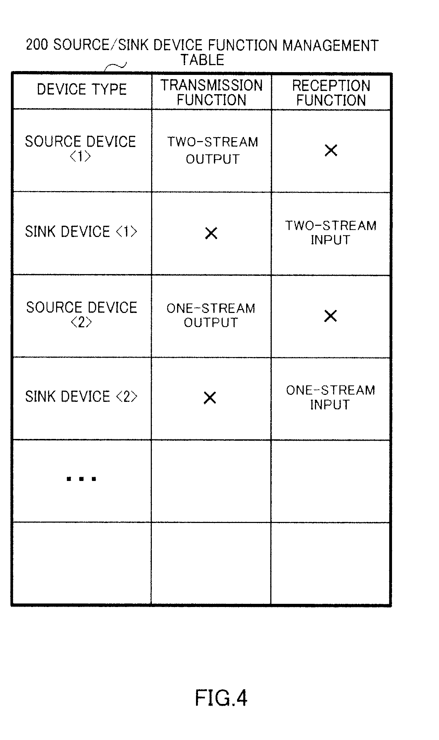

Memory section 112 memorizes source/sink device function management table 200 for managing the performance and functions of source devices 120 and 130 and sink devices 140 and 150 (see FIG.4). To be more specific, with source devices 120 and 130, the function refers to the number of output streams in which each device is able to output video and audio per content item at the same time. Likewise, with sink devices 140 and 150, the function refers to the number of input streams in which each device is able to receive as input video and audio per content item at the same time.

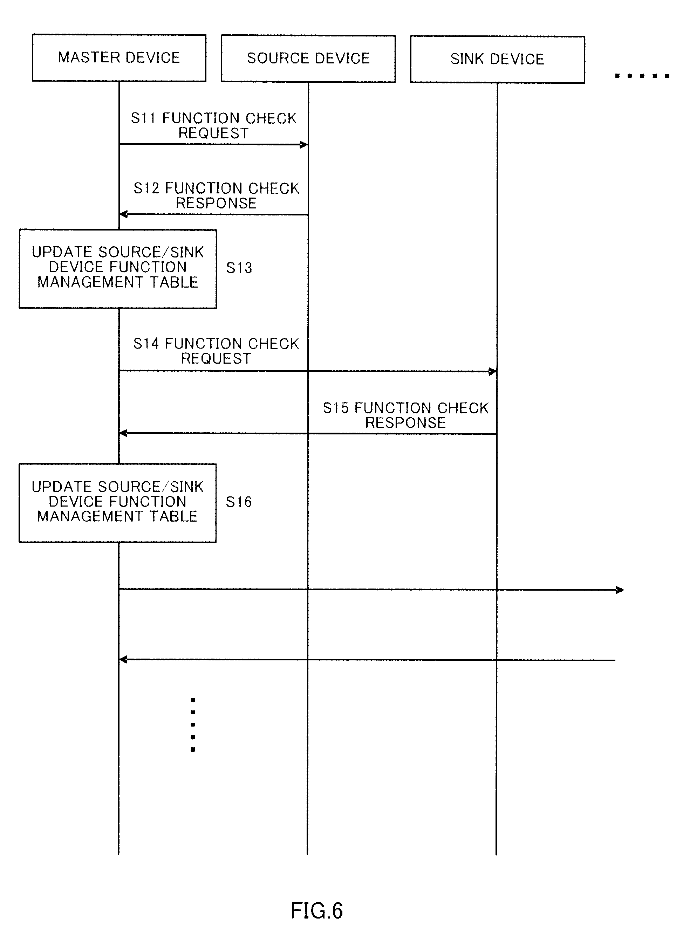

Furthermore, memory section 112 holds processing data on a temporary basis. Source/sink device function management table 200 (see FIG.4) manages the state of band kept between all devices on channel 100. Source/sink device function management table 200 is updated by the source/sink device function check processing of FIG.6 (described later).

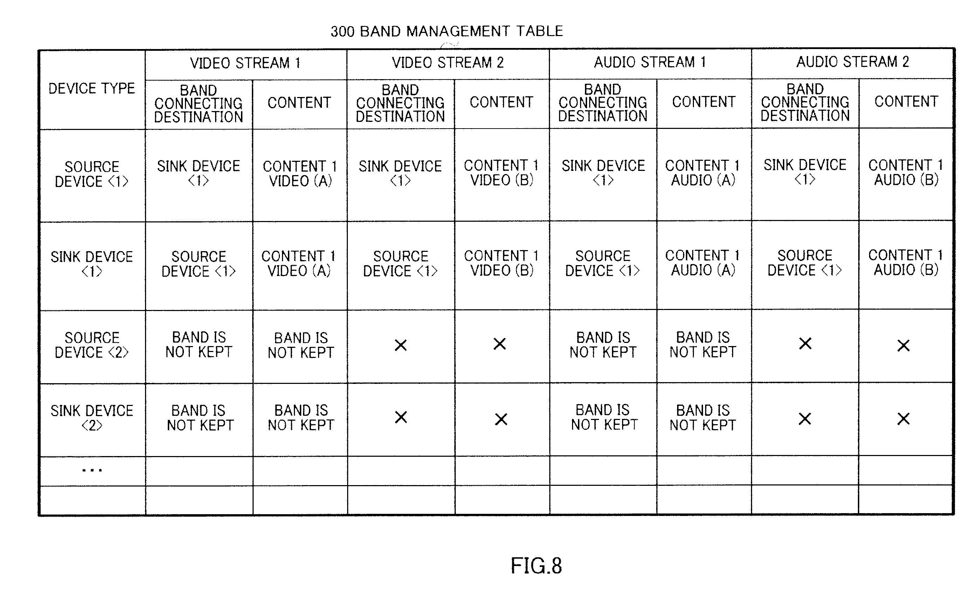

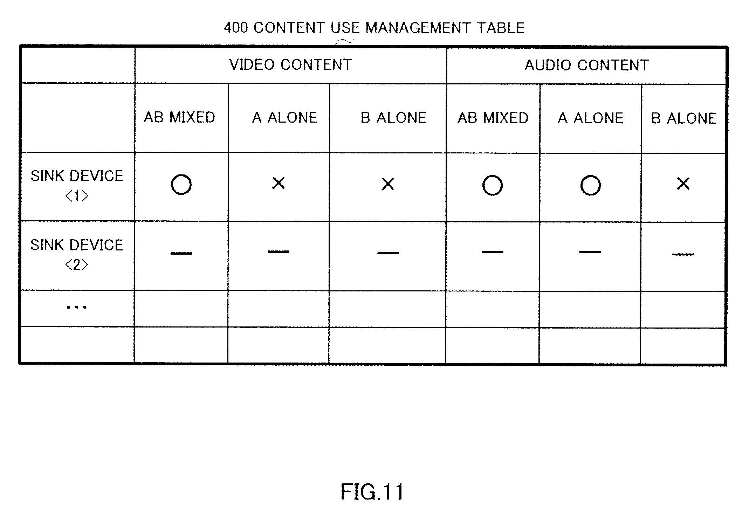

Furthermore, memory section 112 stores band management table 300 (see FIG.8) and content use management table 400 (see FIG. 11). Band management table 300 manages the state of bands kept by source devices 120 and 130 and sink devices 140 and 150. Also, content use management table 400 manages the situation of use of content by source devices 120 and 130 and sink devices 140 and 150.

Communication control section 113 communicates on channel 100.

Source device 120 has processing section 121, data output section 122, and communication control section 123. Source device 130 has processing section 131, data output section 132, and communication control section 133.

Processing sections 121 and 113 perform processing related to source devices 120 and 130. Processing related to source devices 120 and 130 includes all processing performed according to this embodiment. Examples include processing of reporting information about a device check request from master device 110, via communication control sections 123 and 133. Other examples include processing of requesting a playback, stop and so on, to data output sections 122 and 132. Other examples include processing of reporting a band securing or releasing request from master device 1 10 to communication control sections 123 and 133 and performing a control.

Data output section 122 and 132 output video and audio content. Communication control sections 123 and 133 secure bands allocated by master device 110 and communicate on channel 100.

Sink device 140 has processing section 141, data input section 142 and communication control section 143. Sink device 150 has processing section 151, data input section 152 and communication control section 153.

Processing sections 141 and 151 perform processing related to sink devices. Processing related to sink devices cover all processing performed according to the present embodiment, including processing of reporting information via communication control sections 143 and 153 about a device check request and content use request from master device 110, processing of requesting start and stop to data input section 142 and 152, and processing of reporting a band connecting/disconnecting request from master 110 to communication control sections 143 and 153 and performing a control.

Data input sections 142 and 152 receive as input video and audio content.

Communication control sections 143 and 153 secure bands by means of master device 110, connect with the bands of the source devices, and communicate on channel 100.

FIG.4 shows an example of source/sink device function management table 200.

As shwon in FIG.4, source/sink device function management table 200 stores transmission functions and reception functions on a per device type basis. In the example of FIG.4, for example, with source device 120 (source device <1>), the transmission function is "two-stream output" and the reception function is "none." Source device 120 (source device <1>) is, for example, a BD. Also, source device 120 (source device <1>) is applicable to a case where a user makes selection from the two-stream output of a terrestrial digital broadcast tuner. Sink device 140 (sink device <1>) is, for example, a rear display, a headphone amplifier or a similar device. Source device 130 (source device <2>) is, for example, a DVD. Sink device 150 (sink device <2>) is, for example, an audio amplifier.

In FIG.4, source device 120 (source device <1>) is capable of outputting two streams, and sink device 140 (sink device <1>) is capable of receiving two streams as input. Also, source device 130 (source device <2>) is capable of outputting one stream, and sink device 150 (sink device <2>) is capable of receiving one stream as input.

Now, the operations of a multimedia device control system configured as described above will be described.

### [Overall processing]

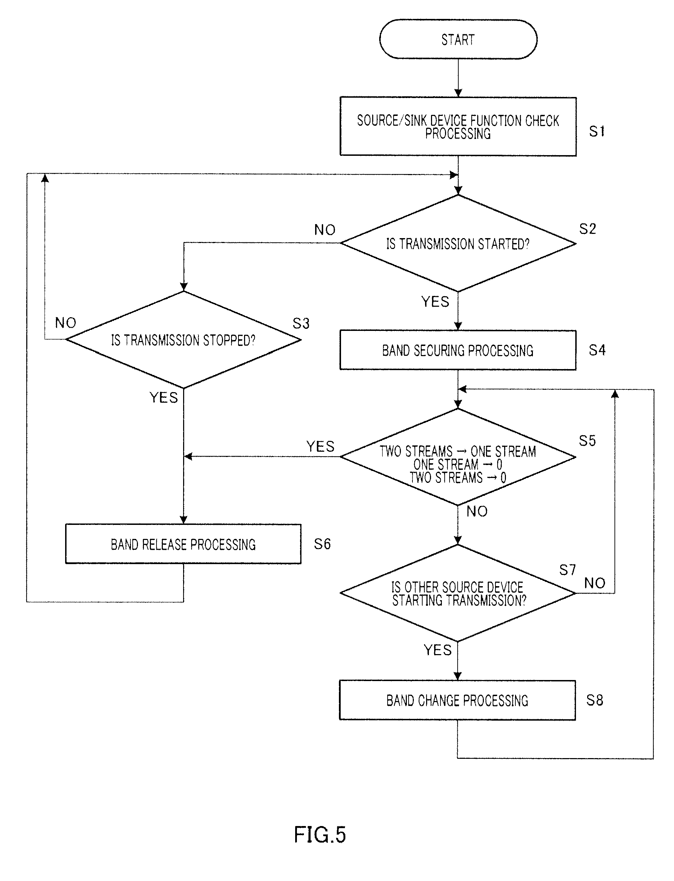

Fig. 5 is a flowchart showing processing of master device 110 on an overall scale. In this figure, "S" stands for "step."

In step S1, master device 110 carries out "source/sink device function check processing" for checking the functionality conditions of source devices and sink devices (see FIG.6). For example, in a vehicle-mounted multimedia device control system, shortly after a user turns on an engine and powers on an electronic device, master device 110 checks whether or not the source and sink devices can transmit BD content, before the source and sink devices transmit video and audio.

In step S2, master device 110 decides whether or not to start transmission from source devices 120 and 130. This start of transmission is decided based upon whether or not to transmit BD content.

If source devices 120 and 130 do not start transmitting video and audio (that is, if source devices 120 and 130 do not start transmitting BD content), the step moves to step S3, and, if source devices 120 and 130 start transmitting video and audio content (that is, if source devices 120 and 130 start transmitting BD content), the step moves to step S4.

In step S3, master device 110 decides whether not to stop video and audio transmission in an arbitrary source device. When not stopping video and audio transmission in an arbitrary source device, master device 110 does not do anything, and the step returns to above step S2. In this case, step S2 ad step S3 form an infinite loop.

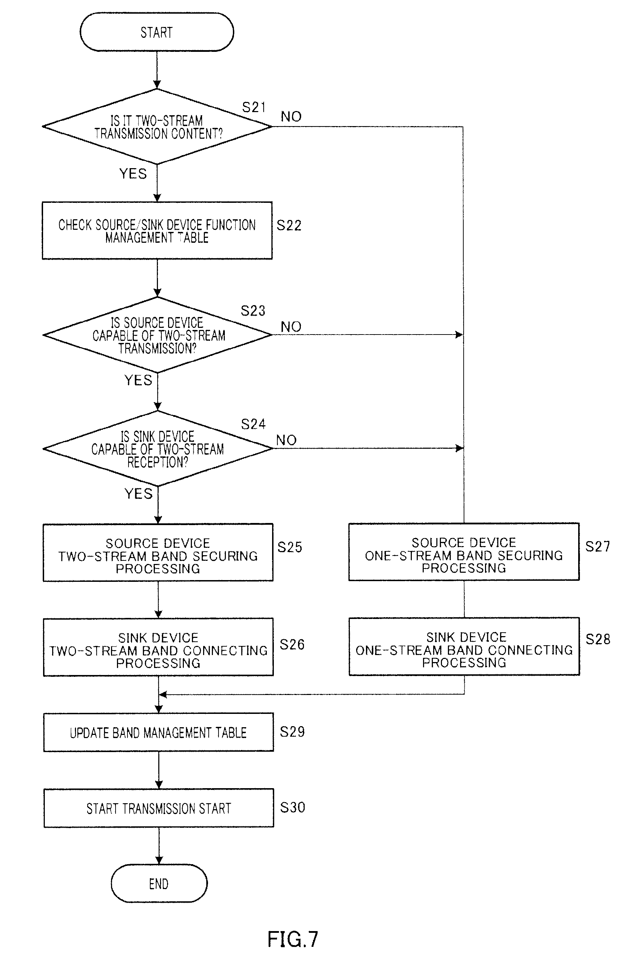

In step S4, master device 110 performs band securing processing (see FIG.7).
In this band securing processing, master device 110 looks at the functions of source/sink devices, and secures two streams of band when a source/sink device is capable of transmitting two streams of band, or secures one stream of band when a source/sink device is not capable of transmitting two streams of band. The details of band securing processing will be described using FIG.7.

In step S5, master device 110 decides whether or not to change channel 100 for the source devices from two streams to one stream, from two streams to zero, or from one stream to zero, based on user operation.

If video and audio transmission stops in an arbitrary device in above step S3, or when channel 100 changes from two streams to one stream, from two streams to zero or from one stream to zero in above step S5, the step moves to step S6.

In step S6, master device 110 performs band release processing and moves back to above step S2.

If in above step S5 channel 100 does not change from two streams to one stream, from two streams to zero or from one stream to zero, the step moves to step S7.

In step S7, master device 110 decides whether or not to stop video and audio transmission in another source device.

If another source device does not transmit video and audio, the step returns to above step S5.

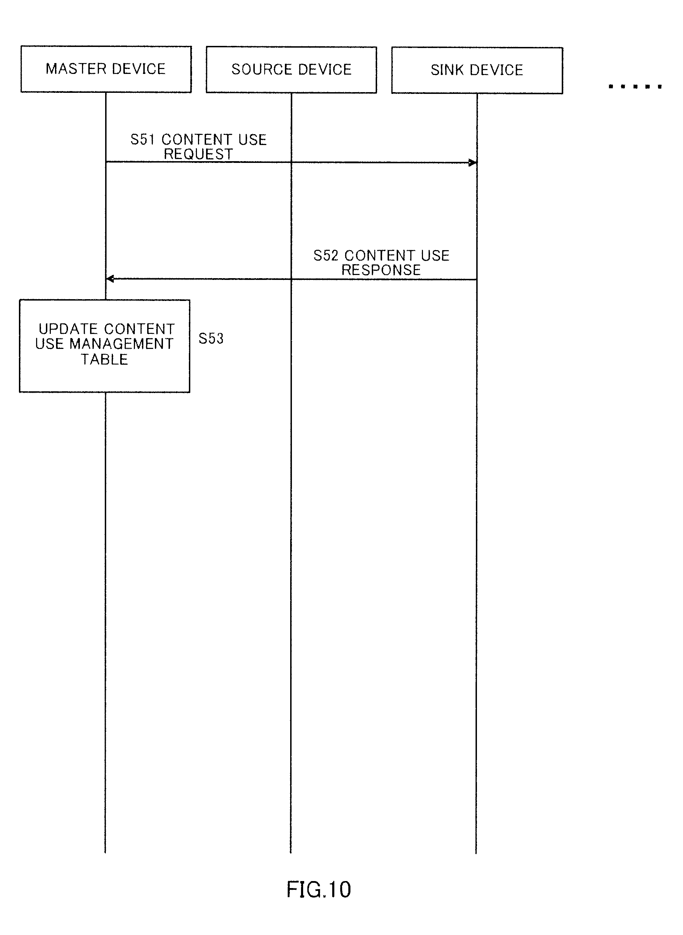

If another source device transmits video and audio, in step S8, master device 110 performs band change processing (see FIG.10), and the step returns to above step S5.

### [Source/sink device function check processing]

FIG.6 is a stream diagram for explaining "source/sink device function check processing" of step S1 in FIG. 5.

As shown in FIG.6, master device 110 issues a function check request to all of source devices 120 and 130 connected to channel 100 (see S11). This function check request is not a general check request/check response which a master device 110 issues to acquire information relate to source devices and sink devices, and is a check request/check response that is issued in order to acquire information required upon transmitting BD content in two streams or in one stream. To be more specific, this function check request is a request to check whether two streams or one stream can be transmitted using a BD.

Source devices 120 and 130 having received a function check request transmit function check responses to master device 110 (see S12). These function check responses answer whether source devices 120 and 130 use two BD streams or one BD stream, at the time source devices 120 and 130 receive the above function check request.

Master device 110 updates source/sink device function management table 200 (see FIG.4) held in memory section 112 (see FIG.3) of master devilce 110, based on the function check responses from source devices 120 and 130 (see S13).

Master device 110 issues a function check request to all of sink devices 140 and 150 connecting with channel 100 (see S14).

Sink devices 140 and 150 having received a function check request transmit function check responses to master device 110 (see S15).

Master device 110 updates source/sink device function management table 200 (see FIG.4) held in memory section 112 (see FIG.3) of master devilce 110, based on the function check responses from sink devices 140 and 150 (see S16).

Master device 110 thus checks functions of source and sink devices on channel 100, and, based on function check responses acquired as a result of the checking, updates source/sink device function management table 200 (see FIG.4) in memory section 112 (see FIG.3). In FIG.4, source device 120 (source device <1>) supports two-stream output, sink device 140 (sink device <1>) supports two-stream input, source device 130 (source device <2>) supports one-stream output and sink device 150 (sink device <2>) supports one-stream input.

Before securing bands, master device 110 checks the performance of source devices and sink devices, and secures bands to suit the performance of these devices. Consequently, the above-described source/sink device function check processing is carried out first when master device 110 secures a transmission band, mode in which this processing is performed at appropriate timing, is also possible.

### [Band securing processing]

FIG.7 is a flowchart showing band securing processing. This is a detailed flow of "band securing processing" of step S4 in FIG.5.

In step S21, master device 110 decides whether or not two-stream transmission content is transmitted. In this embodiment, two-stream transmission content is BD content. Master device 110 decides whether BD content is two-stream transmission content or one-stream transmission content.

In the event of two-stream transmission content, in step S22, master device 110 checks source/sink device function management table 200.

In step S23, master device 110 decides whether or not source devices 120 and 130 are capable of two-stream transmission, with reference to source/sink device function management table 200.

If at least one of source devices 120 and 130 is capable of two-stream transmission, in step S24, master device 110 decides whether or not source devices 120 and 130 are capable of two-stream reception, with reference to source/sink device function management table 200.

If at least one of sink devices 120 and 130 is capable of two-stream reception, the step moves to step S25. In step S25 and step S26, master device 110 selects source devices and sink devices depending on the performance of source devices and sink devices (two streams or one stream).

Now, this stream (FIG.7) is not intended to select a device, for which and to which a band is kept or connected, based on the performance of source devices and sink devices (two streams or one stream). This stream checks, with each device, which functionality of two-streams and one-stream that device supports, with reference to source/sink device function management table 200 of FIG.4, and secures a band to suit that device's functionality. That is to say, by the time "band securing processing" starts, the source device and sink device, for which and to which a band is kept or connected, are determined (for example, the combination of source device 120 and sink device 140). Also, in step S25 and step S26, the band the source and sink devices secure and the band to which source and sink devices are connected are decided to be two stream, so that master device 110 secures and connects two bands for the bands for source devices and sink devices.

In step S25 and step S26, master device 110 checks, with each device, which functionality of two-streams and one-stream that device supports, with reference to source/sink device function management table 200 (FIG.4), and secures a band to suit that device's functionality. The details will be described below.

If at least one of sink devices 140 and 150 is capable of two-stream reception, in step S25, master device 110 performs two-stream band securing processing for source devices 120 and 130, and the step moves to step S25. In the two-stream band securing processing, first, master device 110 issues a band securing request (for two bands) to source devices 120 and 130. In response to this request, source devices 120 and 130 each secure two bands for BD video and audio to output from data output sections 122 and 132 onto channel 100, by means of communication control section 113.

In step S26, master device 110 performs processing of connecting the two streams of band of sink devices 140 and 150, and the step moves onto step S29. In the two stream band connecting processing, first, master device 110 issues a band connection request (for two bands/connecting destination band information (information such as the band number of connecting destination source devices), to sink devices 140 and 150. In response to this request, sink devices 140 and 150 connect with the bands for BD video and audio already kept on channel 100 by source devices 120 and 130, through communication control section 113, and acquires BD video and audio information from source devices 120 and 130.

As shown with one example of source/sink device function management table 200 in FIG.4, the present embodiment assumes that source device 120 and sink device 140 are BDs that are capable of transmitting and receiving two-stream transmission content. Consequently, in above step S25, master device 110 performs two-stream band securing processing for source device 120, and, in above step S26, performs two-stream band connecting processing for sink device 140.

On the other hand, when there is no request to transmit two-stream transmission content in above step S21, the step moves to step S27. Also, if in above step S23 source devices 120 and 130 are not capable of transmitting two streams, the step moves to step S27. If in above step S24 sink devices 140 and 150 are not capable of receiving two streams, the step also moves to step S27.

In step S27, master device 110 performs one-stream band securing processing for source devices 120 and 130.

In step S28, master device 110 performs one-stream band securing processing for sink devices 140 and 150.

In step S29, master device 110 updates band management table 300 (see FIG.8) that manages the state of band kept by each device.

In step S30, master device 110 issues to target source devices 120 and 130 a permit to start transmission. Target source devices 120 and 130 start transmission, and the flow is finished.

FIG.8 shows one example of band management table 300.

As shown in FIG.8, band management table 300 stores a video stream and audio stream for each device type. Band management table 300 is stored in memory section 112 of master device 110 of FIG.3.

In FIG.8, the devices on channel 100 are source device 120 (source device <1>), sink device 140 (sink device <1>), source device 130 (source device <2>), and sink device 150 (sink device <2>). For each of these device types, the band connecting destinations and contents of video stream 1, video stream 2, audio stream 1 and audio stream 2 are saved.

For example, for source device 120 (source device <1>) being a BD, the band connecting destination of video stream 1 is sink device 140 (sink device <1>) and its content is content 1 video (A). The band connecting destination of video stream 2 is sink device <1> and its content is content 1 video (B). The band connecting destination of audio stream 1 is sink device <1> and its content is content 1 audio (A). The band connecting destination of audio stream 2 is sink device <1> and its content is content 1 audio (B).

On the other hand, for source device 140 (sink device <1>) being a BD, the band connecting destination of video stream 1 is sink device 120 (source device <1>) and its content is content 1 video (A). The band connecting destination of video stream 2 is source device <1> and its content is content 1 video (B). The band connecting destination of audio stream 1 is source device <1> and its content is content 1 audio (A). The band connecting destination of audio stream 2 is source device <1> and its content is content 1 audio (B).

By contrast wit these, source device 130 (source device <2>), being a DVD for example, uses only one stream of band. Here, with source device <2>, the band connecting destinations and contents of video stream 1 and audio stream 1 secure no band. Likewise, with sink device 150 (sink device <2>), the band connecting destinations and contents of video stream 1 and audio stream 1 secure no band.

By executing band securing processing of FIG.7, master device 110 determines the bands for source and sink devices to secure, based on source/sink device function management table 200 (see FIG.4), and secures channel 100 between the source and sink devices. Then, master device 110 updates band management table 300 (see FIG.8) saved in memory section 112 (see FIG.3).

### [Band change processing]

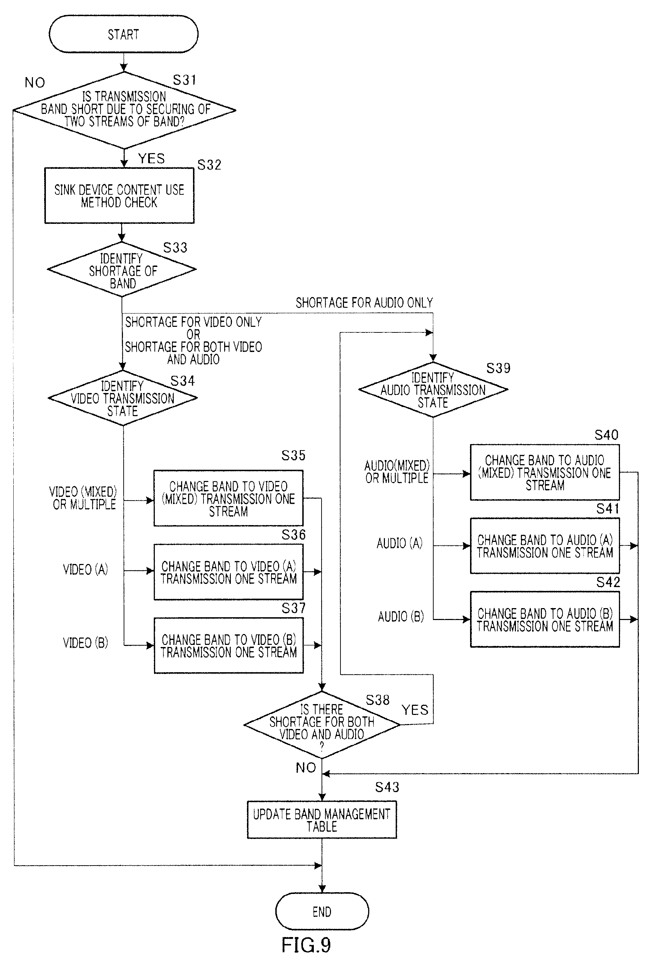

FIG.9 is a flowchart showing band change processing. This is a detailed flow of the "band change processing" of step S8 in FIG. 5.

The band change processing of FIG.9 is carried out only when two streams of band are kept, and is not carried out when only one stream of band is kept at the time of band securing processing (FIG.7).

In step S31, master device 110 decides whether or not there is a shortage of transmission band by securing two streams of band. If securing two streams of band does not cause a shortage of transmission band, master device 110 decides that this band change processing does not have to be carried out, and terminates this flow.

If, on the other hand, securing two streams of band causes a shortage of transmission band, in step S32, master device 110 checks the method of using content in sink devices 140 and 150. The details of this content use method of sink devices 140 and 150 will be described later with reference to FIG.10 and FIG.11.

In step S33, master device 110 identifies a shortage of band. That is to say, master device 110 decides whether band is "short for video only," "short for both video and audio" or "short for audio only." In the event band is "short for video only" or "short for both video and audio," the step moves to step S34, and, in the event band is "short for audio only," the step moves to step S39.

In step S34, master device 110 identifies the state of video transmission. Video transmission states to be identified include "video (mixed)" or "multiple video," "video (A)," and "video (B)." A BD can display two HD-size (1920×1080) video data items at the same time, and, by using PinP functionality, can output a different video data item on a screen while another video data item is being played back. Above "video (mixed)" or "multiple video" refers to video using this PinP functionality.

When "video (mixed)" or "multiple video" is identified, in step S35, master device 110 changes the band to video (mixed) transmission one stream, and the step moves to step S38.

When "video (A)" is identified, in step S36, master device 110 changes the band to video (A) transmission one stream, and the step moves to step S38.

When "video (B)" is identified, in step S37, master device 110 changes the band to video (B) transmission one stream, and the step moves to step S38.

In step S38, master device 110 decides whether band is short for both video and audio.

If band is short for both video and audio, the step moves to step S39, and, if band is not short for both video and audio, the step moves to step S43.

A transition to step S39 is given when band is short for both video and audio, and also when band is "short for audio only."

In step S39, master device 110 identifies the state of audio transmission. Audio transmission states to be identified include "audio (mixed)" or "multiple audio," "audio (A)," and "audio (B)."

When "audio (mixed)" or "multiple audio" is identified, in step S40, master device 110 changes the band to audio (mixed) transmission one stream, and the step moves to step S43.

When "audio (A)" is identified, in step S41, master device 110 changes the band to audio (A) transmission one stream, and the step moves to step S43.

When "audio (B)" is identified, in step S42, master device 110 changes the band to audio (B) transmission one stream, and the step moves to step S38.

In step S43, master device 110 updates band management table 300 (see FIG.8), and finishes the present flow.

FIG.10 is a control stream diagram for explaining "content use method" of step S32 in FIG.9.

As shown in FIG.10, master device 110 issues a content use request to sink devices 140 and 150 on channel 100 (see S51). Using this content use request, master device 110 checks, with sink devices 140 and 150, which one of two streams the present BD content uses, or whether the present BD content uses both of the two streams.

Sink devices 140 and 150 having received the content use request transmit content use responses to master device 110 (see S52). Using these content use requests, sink devices 140 and 150 answer which one of the two streams the present BD content uses or whether the present BD content uses both of the two streams.

Master device 110 updates content use management table 400 (see FIG.11) held in memory section 112 (see FIG.3) of master device 110, based on the content use responses from sink devices 140 and 150 (see S53).

FIG.11 show one example of content use management table 400.

As shown in FIG.11, content use management table 400 stores video content and audio content per sink device. Content use management table 400 is stored in memory section 112 of master device 100 in FIG.3.

In FIG.11, sink device 140 (sink device <1>) uses video content in "video AB (mixed) " and uses audio content in "audio AB (mixed)" and in "audio A (alone)." Sink device 150 (sink device <2>) is not subject to use of two streams of video and audio data contents.

Master device 110 executes the band change processing of FIG.9. In this band change processing, the method of using content is checked by the control stream of FIG.10, and content use management table 400 of FIG.11 is updated.

When another device starts transmission and there is a shortage of channel band, master device 110 checks the method of using received content with sink devices 140 and 150 (see FIG.10). Then, master device 110 keeps the result of checking the method of using received content, in content use management table 400 in master device 110 of FIG.3. Master device 110 changes the secured band based on content use management table 400.

Upon changing a band having been kept, master device 110 checks the situation of use of content with sink devices 140 and 150, and performs a band control.
For example, upon identifying the method of using content, if master device 110 identifies one stream of method of using content, master device 110 maintains that method of one stream, or, if master device 110 identifies two or more methods of using content, master device 110 makes the method transmission "mixed transmission" and makes the band one stream. That is to say, upon changing the band to one stream in the situation where two or more methods of using content are involved, master device 110 performs a control to use mixed transmission. Master device 110 disconnects one of the two streams that is not used, and makes the other remaining stream use mixed transmission.

The reason to use mixed transmission is as follows. Even when two or more methods of using content need to be changed to one stream, it is preferable not to make a user feel awkward. Furthermore, a BD is capable of outputting a plurality of video and audio data items at the same time, like by PinP. The present embodiment utilizes this mixed output of a BD, and, when the band needs to be changed to one stream, leaves the video and audio a user is then using, by means of mixed output. From the user's perspective, the content that he is using does not end suddenly but is maintained by switching to mixed output.

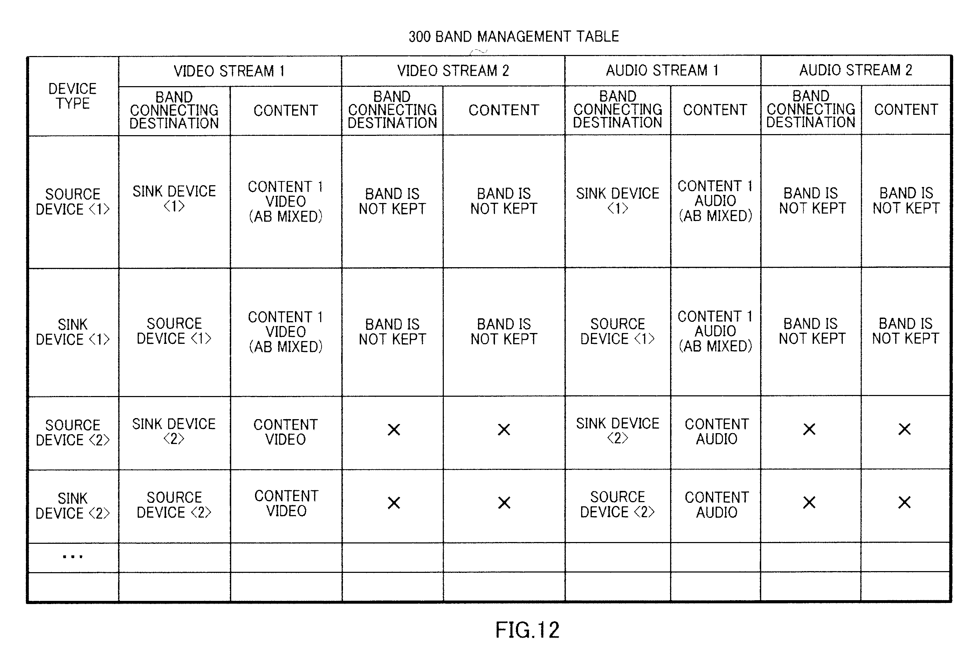

FIG.12 shows one example of band management table 300, assuming a case where video and audio are both changed to one stream while two-stream output of video and audio is in progress. As in FIG.8, the devices on channel 100 are source device 120 (source device <1>), sink device 140 (sink device <1>), source device 130 (source device <2>), and sink device 150 (sink device <2>). For each of these device types, the band connecting destinations and contents of video stream 1, video stream 2, audio stream 1 and audio stream 2 are saved.

As described above, when two or more content uses methods are involved, master device 110 changes the transmission method to mixed transmission and makes the band one stream. For example, master device 110 performs a band change according to content use management table 400 of FIG.11 so that video and audio both change from two-stream video/audio output to one-stream.

Now, updating from band management table 300 of FIG.8 to band management table 300 of FIG.12 will be described using content use management table 400 of FIG.11.

A case will be described here as an example where there is a shortage of band for both video and audio, in respect to the band kept between source device <1> and sink device <1>. Checking content use management table 400 of FIG.11, master device 110 finds out that sink device <1> is using video content in a "AB mixed" state and using two variations of audio content at the same time, "AB mixed" and "A alone."

As for video, only "AB mixed" is used, so that the source device uses "A alone" of video stream 1 for "AB mixed" transmission, and releases the band of the other, video stream 2 free. The sink device disconnects video stream 2, does not disconnect the band of video stream 1, and receives "AB mixed" from the source device. By this means, only video stream 1 remains (as "AB content") among the video streams in band management table 300, and video stream 2 is in a state where band is not kept.

As for audio, two variations of "AB mixed" and "A alone" are used at the same time, so that the source device uses "A alone" of audio stream 1 for "AB mixed" transmission, and releases the band of the other, audio stream 2 free. The sink device disconnects audio stream 2, does not disconnect the band of audio stream 1, and receives "AB mixed" from the source device. By this means, only audio stream 1 remains (as "AB content") among the audio streams in band management table 300, and audio stream 2 is in a state where band is not kept.

This is executed through the processing of step S35, step S36, step S37, step S40, step S41, and step S42, in the flow of FIG.9. In these steps, processing to release and disconnect band is performed. Consequently, by the time to reach step S43 of updating band management table 300, the band is changed to one stream.

### [Band release processing]

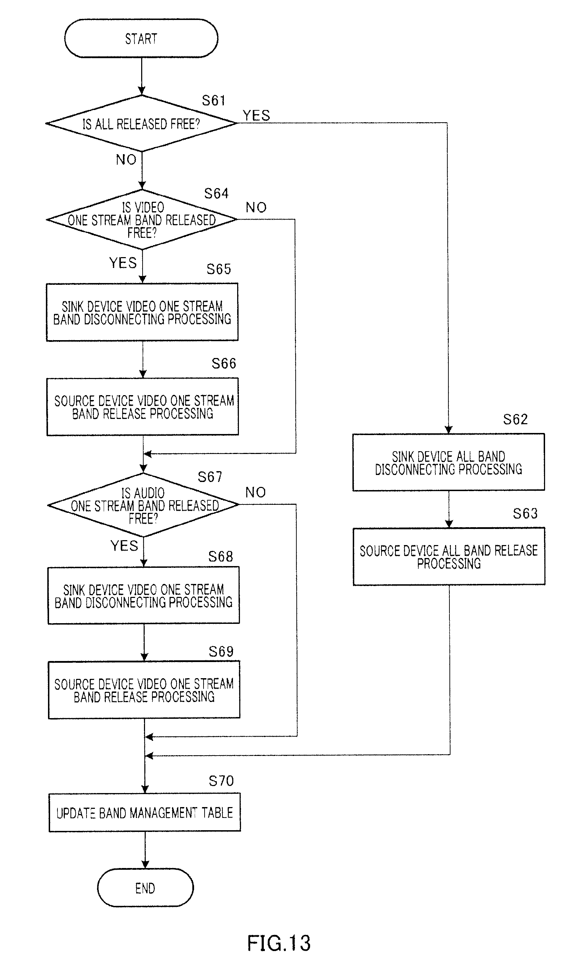

FIG.13 is a flowchart showing band release processing. This is a detailed flow of "band release processing" of step S6 in FIG.5.

In step S61, master device 110 decides whether or not to release all source and sink devices free. When source and sink devices are all going to be released free, the step moves to step S62, or, when source and sink devices are not all going to be released free, the step moves to step S64. To release all in this context does not mean releasing or disconnecting all bands of source devices and sink devices connected to the channel, and a stream for processing bands which each source device or sink device secures or connects to, is presumed here. This is, for example, processing between source device <1> and sink device <1>.

Master device 110 performs all-band disconnecting processing with respect to sink devices 140 and 150 in step S62, performs all-band release processing with respect to source devices 120 and 130 in step S63, and then the step moves onto step S70. In the all-band release processing, the band of one of sink devices 140 and 150, connected to one of source devices 120 and 130, is entirely released free and disconnected.

In step S64, master device 110 decides whether or not this is video one-stream band releasing, and the step moves to step S65 in the event of video one-stream band releasing, or the step moves to step S67 if this is not video one-stream band releasing.

Master device 110 performs video one-stream band disconnecting processing with respect to sink devices 140 and 150 in step S65, and performs video one-stream band release processing with respect to source devices 120 and 130 in step S66, and then the step moves to step S67. In this video one-stream band disconnecting processing, one-stream band of one of sink devices 140 and 150, connected with one of source devices 120 and 130, is released free and disconnected.

In step S67, master device 110 decides whether or not this is audio one-stream band releasing, and the step moves to step S68 in the event of audio one-stream band releasing, or the step moves to step S70 if this is not audio one-stream band releasing.

Master device 110 performs audio one-stream band disconnecting processing with respect to sink devices 140 and 150 in step S68, and performs audio one-stream band release processing with respect to source devices 120 and 130 in step S69, and then the step moves to step S70. In this audio one-stream band disconnecting processing, one-stream band of one of sink devices 140 and 150, connected with one of source devices 120 and 130, is released free and disconnected.

In step S70, master device 110 updates band management table 300 (see FIG.8 and FIG.12) and finishes the flow.

As described above, with the present embodiment, upon transmitting a plurality of video and audio data items, master device 110 controls video and audio bands, for source and sink devices, with reference to source/sink device function management table 200 and band management table 300. Also, upon changing a band having been kept, master device 110 checks the state of channel 100 and the situation of use of content with sink devices 140 and 150, and performs a band control. For example, when outputting two streams of video ad audio data in one stream, master device 110 changes two streams of video and audio data into one composite stream. By this means, master device 110 is able to manage a multimedia device that is capable of outputting a plurality of video and audio data items at the same time, such as a BD. It is also possible to provide video and audio for a multimedia device connected to a channel of a limited frequency band, in an optimal form for user's use. Application to a multimedia device control system to be used in a vehicle-mounted environment is suitable.

The above descriptions show an embodiment of the present invention by way of example and by no means limit the scope of the present invention.

For example, although source devices 120 and 130, sink devices 140 and 150 and master device 110 are provided separately, it is equally possible to provide master device 110 as part of source devices 120 and 130 or sink devices 140 and 150, inside these devices.

Furthermore, although an example has been shown with the present embodiment where video and audio are each provided in two stream, a case is possible as well where only one of video and audio is provided in two streams. Furthermore, when video and audio are provided separately, it is equally possible to secure video and audio in the same band and do this with two streams, in two bands. Furthermore, although an example has been described above where video and audio are each provided in two streams, the present invention is equally applicable to cases where video and audio are both provided in a greater number of streams.

Furthermore, with the embodiment, in band change processing (see FIG.9), the method of using content is checked (see FIG.10) with sink devices and then the transmission band is changed. However, it is equally possible to use a method to make the transmission method mixed transmission and make the band one stream, on a fixed basis, regardless of the state of sink devices.

Also, with the embodiment, in band change processing (see FIG.9), the method of using content is checked (see FIG.10) with sink devices and then the transmission band is changed. However, the sink devices may at the same time issue a request of a method of changing the transmission band to a master device, and, according to this request, the band may be changed to one stream.

Furthermore, although the term "multimedia device control system" has been used with the present embodiment for ease of explanation, other terms such as "vehicle-mounted communication apparatus" and "transmission system" may be used as well.

Furthermore, the types, number and connection method of the circuit components to constitute the above multimedia device control apparatus, including the communication control section, memory section and others, are by no means limited to the above-described embodiment.

Also, the above-described multimedia device control apparatus, source device, sink device and transmission system can be implemented in the form of a program for making this multimedia device control apparatus function. This program may be then stored in a computer-readable recording medium.

The disclosure of Japanese Patent Application No. 2008-274876, filed on October 24, 2008, including the specification, drawings and abstract, is incorporated herein by reference in its entirety.

### Industrial Applicability

The multimedia device control apparatus, source device, sink device and transmission system according to the present invention are suitable for use with a multimedia device control apparatus for controlling multimedia devices by managing channel band in a vehicle-mounted environment. Also, the present invention is by no means limited to a vehicle-mounted environment and is equally applicable to any and all apparatuses as long as a master device to control multimedia devices connected to a channel of a limited frequency band is present.

### Reference Signs List

100 Channel
111 Processing section
112 Memory section
113 Communication control section
120, 130 Source device 121, 131, 141, 151 Processing section
122, 132 Data output section
123, 133, 143 and 153 Communication control section
140, 150 Sink device
142, 152 Data input section
200 Source/sink device function management table
300 Band management table
400 Content use management table

## Claims

1. A multimedia device control apparatus that comprises a channel and a multimedia device which is to be connected to the channel and which is capable of outputting a plurality of video and audio data items at the same time, and that controls the multimedia device by controlling a band of the channel, the multimedia device control apparatus comprising:
a function management table that manages a function of the multimedia device;
a band management table that manages a state of a band kept by the multimedia device; and
a band control section that, when a plurality of video and audio data items are transmitted, controls video and audio bands, for the multimedia device, with reference to the function management table and the band management table.

2. The multimedia device control apparatus according to claim 1, further comprising a content use management table that manages a situation of use of content by the multimedia device,
wherein the band control section controls the video and audio bands, for the multimedia device, based on the situation of use of content.

3. The multimedia device control apparatus according to claim 1, wherein the multimedia device outputs two streams of video and audio data at the same time.

4. The multimedia device control apparatus according to claim 1, wherein, when two streams of video and audio data are transmitted in one stream, the band control section changes the two streams of video and audio data into one composite stream.

5. A source device that is to be connected to a multimedia device control apparatus via a channel and that is capable of outputting a plurality of video and audio data items at the same time,
wherein the source device receives a device control signal from the multimedia device control apparatus and performs transmission using a band specified by the control signal.

6. The source device according to claim 1, wherein the multimedia device control apparatus comprises:
a function management table that manages a function of a device connected to the channel;
a band management table that manages a state of a band kept by the device connected to the channel; and
a band control section that, when a plurality of video and audio data items are transmitted, outputs a device control signal for controlling video and audio bands to the source device, with reference to the function management table and the band management table.

7. A sink device that is connected to a multimedia device control apparatus via channel and that is capable of outputting a plurality of video and audio data items at the same time,
wherein the sink device receives a device control signal from the multimedia device control apparatus and performs reception using a band specified by the control signal.

8. The sink device according to claim 7, wherein the multimedia device control apparatus comprises: a function management table that manages a function of a device connected to the channel;
a band management table that manages a state of a band kept by the device connected to the channel; and
a band control section that, when a plurality of video and audio data items are transmitted, outputs a device control signal for controlling video and audio bands to the sink device, with reference to the function management table and the band management table.

9. A transmission system comprising a channel, a multimedia device that is connected to the channel and that is capable of outputting a plurality of video and audio data items at the same time, and a multimedia device control apparatus that manages the multimedia device by managing a band of the channel, wherein the multimedia device control apparatus comprises:
a function management table that manages a function of the multimedia device;
a band management table that manages a sate of a band kept by the multimedia device; and
a band control section that, when a plurality of video and audio data items are transmitted, controls video and audio bands, for the multimedia device, with reference to the function management table and the band management table.
